# EUROPEAN PATENT APPLICATION

(11) **EP 1 621 973 A2**
(43) Date of publication of application: **01.02.2006**
(21) Application number: 05016222.1
(22) Date of filing: 26.07.2005
(51) Int. Cl.: G06F 3/02

(54) **Keyboard with special symbol key and code exchange method for such key**

(30) Priority: 30.07.2004 CN 200410058874
(71) Applicant: ACER INCORPORATED, Taipei Hsien 221 (TW)
(72) Inventor: Wen-Lin, Szu, Hsichih Taipei 221 (TW); Kao, Shu-Kuo, Hsichih Taipei 221 (TW); Chuang, Tzu-Lung, Hsichih Taipei 221 (TW)
(74) Representative: UEXKÜLL & STOLBERG

(57) **Abstract**

A keyboard includes at least one special symbol key, a controller and a middleware. The controller asserts a code signal when the special symbol key is depressed. The middleware performs a matrix mapping procedure to convert the code signal into a new one conforming to an operation system of the data processing device if the code signal is not identical to that of the operation system.

## Description

### FIELD OF THE INVENTION

The present invention relates to a keyboard, and more particularly to a keyboard with special symbol keys. The present invention also relates to a code exchange method for these special symbol keys.

### BACKGROUND OF THE INVENTION

ASCII (American Standard Code for Information Interchange) is a character set and a character encoding system based on the alphabet used in modem English language. ASCII was first published as a standard in 1963. There are many variations of ASCII, but the common form is ANSI X3.4 as well as ISO 646 International Reference Version. The standard keyboard generally uses standard key codes to express 128 codes with 7 bits. The 128 codes, e.g. 0~ 127, comprise control characters, English letters and Arabic numerals. Such a standard is also referred as ASCII NO.5 standard.

Since the English-language versions of ASCII only can represent letters (A^{~} Z, a^{~} z), numbers (0^{~} 9) and some regular punctuation marks with 128 codes, it is not satisfied to the operating system or word processing software in Latin script-based European languages such as French, German, and Swedish. Moreover, approximately 45 % of people in the world use pictograph languages such as Chinese, Korean and Japanese languages. Compared to English, there are over ten thousands of characters in the pictograph languages. For overcoming this problem, two approaches are developed. The first character encoding approach, which is introduced by IBM and called Extended ASCII, is used on the original IBM PC and later produced variations. Based on the 7-bit characters of the ASCII NO.5 standard, Extended ASCII codes use an 8-bit encoding system representing 256 characters. In the Extended ASCII codes, the additional 128 codes, which are not available from the ASCII NO.5 standard, include many useful characters such as special symbols, functional symbols and control characters. Extended ASCII is the worldwide standard for encoding text on IBM compatible personal computers. The second character encoding approach is an ISO standard 8859 that describes its own set of 8-bit ASCII extensions. The most popular is ISO 8859-1, also called ISO Latin1, which contains characters sufficient for the most common Western European languages. ISO 8859-1 is the common character encoding standard used by the X Window System and most Internet standards. ISO 8859-1 is also based on the ASCII NO.5 standard and utilizes the eighth bit, which was unused in ASCII, to allow positions for another 128 characters. Since the ISO 8859-1 encoding system can be supported by Hypertext Markup Language (HTML) and Windows 95/98 operating system and has its own set of characters, this standard is also called "Windows Latin-1".

Eventually, a Unicode encoding system, which is also based on the ASCII NO.5 standard and in conjunction with the ISO 10646 standard, was developed. ISO 10646 standard is intended to include all characters from each language by working toward a 4-byte (32-bit) code to provide more than 4 billion (i.e. 2" 32=4,294,967,296) characters and codes. Since the 4-byte (32-bit) code has a large amount of space, the Unicode encoding system is simplified to a 2-byte (16-bit) code for some languages, thereby limiting the character space to 16 bits or a maximum of 65,536 characters ((i.e. 2 16). However, 2-byte (16-bit) code is insufficient to cover all languages. Nowadays, this Unicode encoding system is used in Japanese, Korean and Traditional Chinese characters. In addition, the Big-5 encoding system used on personal computers having MS-DOS and MS-Windows operating systems is also 2-byte (16-bit) code.

From the above discussion, the encoding systems used in different languages are all based on the ASCII NO.5 standard but have their own set of extensions. The Codes 0-127 is derived from the ASCII NO.5 standard, the additional codes from the Code 128 comprise the characters and symbols representing the local languages. The examples of such encoding systems comprise Traditional Chinese Big-5, simplified Chinese Hz, Japanese JIS and Korean KSC encoding systems. In a case that a key corresponding to one of the Codes 0^{~} 127 is depressed, for example when the Code 65 representing a capital letter "A" is depressed, no error may occur because the encoding systems used in different languages are all based on the ASCII NO.5 standard. Whereas, since the additional codes from the Code 128 are not identical in all encoding systems, if any special symbol key representing the character or symbol not belonging to the ASCII NO.5 encoding system, for example the currency symbol ¥, £ or € and the engineering symbol Σ, α, β or γ, is included in the keyboard, some problems may occur. For example, in a case that a keyboard based on Traditional Chinese Big-5 encoding system is used, the Code 128 of such encoding system represents the Euro symbol "€". Whereas, according to the Russian encoding system, the Euro symbol "€" is represented by the Code 136. If the keyboard based on Traditional Chinese Big-5 encoding system is used in a computer executing an operating system based on Russian language, when the special symbol key of the Euro symbol "€" is depressed, another symbol or an error code will be displayed on the computer screen. In order to overcome these problems, the common way is to perform input method converting operation or symbol insertion operation, which is inconvenient and time consuming.

### SUMMARY OF THE INVENTION

The present invention provides a keyboard having at least one special symbol key and applicable to the computer using any language-based operating system.

The present invention also provides a code exchange method for use in the keyboard of the present invention, in which a special symbol corresponding to a depressed key is directly displayed on the computer screen without generation of error codes.

In accordance with a first aspect of the present invention, there is provided a keyboard for use with a data processing device. The keyboard comprises at least one special symbol key, a controller and a middleware. The controller asserts a code signal when the special symbol key is depressed. The middleware performs a matrix mapping procedure to convert the code signal into a new one conforming to an operation system of the data processing device if the code signal is not identical to that of the operation system.

In an embodiment, the special symbol key represents a special symbol or character not belonging to the ASCII NO.5 encoding system.

In an embodiment, the special symbol or character is selected from a group consisting of ¥, £, €, E, α, β and γ.

In an embodiment, the controller is an embedded controller, and the controller and the middleware are integrated into a control module.

In an embodiment, the matrix mapping procedure comprises detection of an Input Method Editor (IME) for the operating system, thereby realizing the language using in the operating system.

In an embodiment, the special symbol key is located at an unoccupied portion of the keyboard.

In an embodiment, the special symbol key replaces a function key or a control key of the keyboard.

In an embodiment, the data processing device comprises a notebook, a mobile phone, a personal digital assist (PDA), a panel PC or electronic equipment.

In accordance with a second aspect of the present invention, there is provided a code exchange method for use in a keyboard having at least one special symbol key. The method comprises steps of (a) asserting a code signal when the special symbol key is depressed, (b) detecting an Input Method Editor (IME) for the operating system, thereby realizing the language using in the operating system, and (c) performing a matrix mapping procedure to convert the code signal into a new one conforming to an operation system of the data processing device if the code signal is not identical to that of the operation system.

In an embodiment, the step (a) is performed in an embedded controller of the keyboard.

In an embodiment, the steps (b) and (c) are performed by a middleware.

The above contents of the present invention will become more readily apparent to those ordinarily skilled in the art after reviewing the following detailed description and accompanying drawings, in which:

### BRIEF DESCRIPTION OF THE DRAWINGS

Fig. 1 illustrates a simplified perspective view of a computer keyboard according to a preferred embodiment of the present invention;

Fig. 2 is a functional block diagram illustrating the architecture for implementing code exchange; and

Fig. 3 is a flowchart illustrating the code exchange process performed in the middleware.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

Theses embodiments are illustrated by referring to a keyboard for use in a personal computer. It is understood that the keyboard and the method of the present invention can be applied to any electronic appliance using a keyboard. An example of such electronic appliance includes but is not limited to notebook, a mobile phone, a personal digital assist (PDA), a panel PC or other electronic equipment.

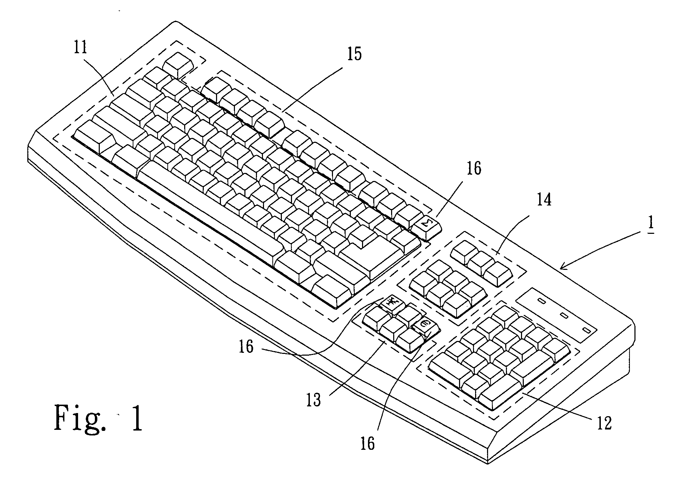

Fig. 1 illustrates a simplified perspective view of a computer keyboard according to a preferred embodiment of the present invention. The input interface of the keyboard 1 comprises a basic typewriter-style alphanumeric keyboard 11, numeric keys 12, directional cursor movement keys 13, fixed control keys 14 (for instance, "HOME", "PAGE UP", "PAGE DOWN", etc.), programmable function keys 15 ("F1", "F2", etc.), all of which are defined according to the ASCII NO.5 encoding system. Besides these standard keys, the keyboard 1 further comprises several special symbol keys 16 representing the characters or symbols not belonging to the ASCII NO.5 encoding system, for example ¥, €, Σ, etc.

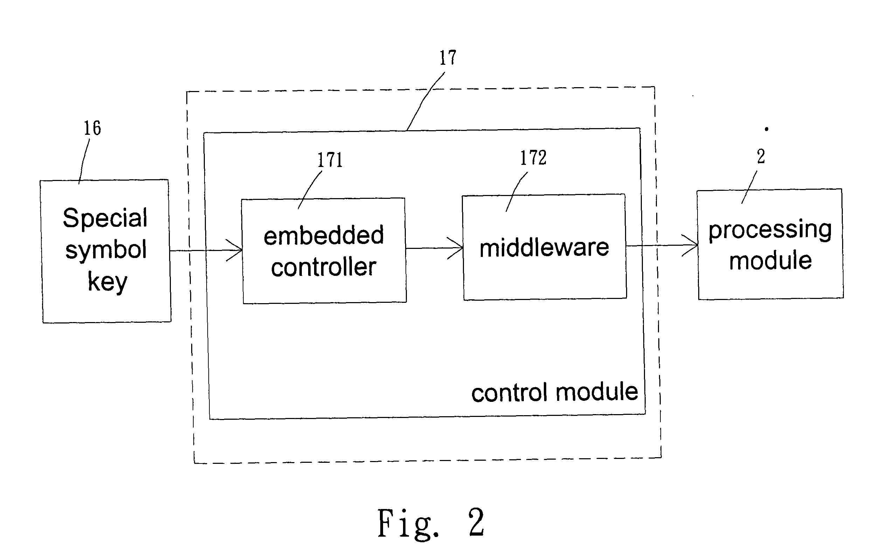

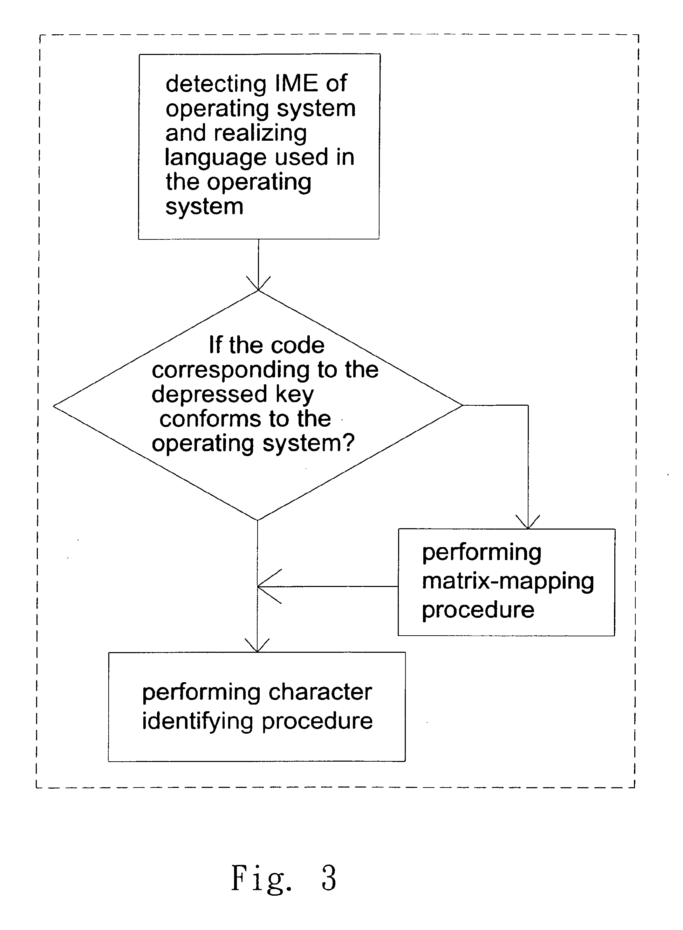

Since the operating system for various languages are distinguished and the encoding system are also different due to the amount of characters and symbols, when one the special symbol keys is depressed, code exchange is essential for different operating system. Please refer to Figs. 2 and 3. The architecture for implementing code exchange according to the present invention comprises the special symbol key 16 of the keyboard 1, a control module 17 disposed under the input interface of the keyboard 1, and a character processing module 2. The keyboard control module 17 comprises an embedded controller 171, for example a control chip, and a middleware 172. When a special symbol key 16 of the keyboard 1 is depressed, an electrical code signal corresponding to the position of the depressed key is asserted from the embedded controller 171 to the middleware 172. In response to the electrical code signal, the middleware 172 will detect an Input Method Editor (IME) for the operating system of the computer to realize the language and encoding system for the operating system. If the code signal corresponding to the position of the depressed key is the same as that of the encoding system for the operating system, a character identifying procedure is performed in the character processing module 2 so as to display the character or symbol of the depressed key on the computer screen. On the contrary, if the code signal corresponding to the position of the depressed key is different from that of the encoding system for the operating system, a matrix mapping procedure should be done, thereby converting the code signal to a new one conforming to the operating system. Afterward, the character identifying procedure is performed in the character processing module 2 to display the character or symbol of the depressed key on the computer screen.

Take a Euro symbol "€" for example. The Euro symbol " €" in the character code table for English, German or Traditional Chinese encoding system is represented by Code 128. Whereas, the Euro symbol "€"in the character code table for Russian encoding system is represented by Code 136. It is of course that the Euro symbol "€" may be represented by the code other Code 128 and 136 when an encoding system based on any other language is used. In accordance with an embodiment of the present invention, the Euro symbol "€" is included in the special symbol keys 16 of the keyboard 1 and represented by Code 128. When the "€" symbol key is depressed, an electrical code signal Code 128 corresponding to the position of the depressed key is asserted from the embedded controller 171 to the middleware 172. In response to the electrical code signal Code 128, the middleware 172 will detect an Input Method Editor (IME) for the operating system of the computer to realize the language and encoding system for the operating system. In a case that the language used in the operating system is English, German or Traditional Chinese, the electrical code signal Code 128 of the "€" symbol is discriminated to be identical to that for the operating system. Then, a character identifying procedure is performed to directly display the "€" symbol of the depressed key on the computer screen. On the contrary, in a case that the language used in the operating system is Russian, the electrical code signal Code 128 of the "€" symbol is discriminated to be different from that for the operating system. Meanwhile, the middleware 172 will perform a matrix mapping procedure, thereby converting the code signal Code 128 to a new code signal Code 136 conforming to the Russian encoding system. Afterward, the character identifying procedure is performed in the character processing module 2 to display the "€" symbol on the computer screen.

Furthermore, for a purpose of meeting the requirement of any particular class or group of persons, the keyboard of the present invention may be designed as an exclusive keyboard for the professional persons. For example, the special symbol keys established on the keyboard can include ¥, £, € , Σ, α, β and γ, which are widely used for business affairs or engineering. Theses special symbol keys can be located anywhere the keyboard, for example at the unoccupied portion of the keyboard. Alternatively, the rarely-used keys, for example the function keys 15 and some control keys 14, can be replaced by theses special symbol keys.

From the above description, it is understood that characters or symbols not belonging to the ASCII NO.5 encoding system can be shown on the computer screen when the special symbol keys are depressed. By means of the middleware, code exchange is effectively implemented when the keyboard of the present invention is used in any operating system so as to avoid occurrence of the error codes. Moreover, the keyboard of the present invention is very user-friendly because the user can directly depress the special symbol key without performing inconvenient input method converting operation or symbol insertion operation.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A keyboard for use with a data processing device comprising:
at least one special symbol key;
a controller asserting a code signal when said special symbol key is depressed; and
a middleware performing a matrix mapping procedure to convert said code signal into a new one conforming to an operation system of said data processing device if said code signal is not identical to that of said operation system.

2. The keyboard according to claim 1 wherein said special symbol key represents a special symbol or character not belonging to the ASCII NO.5 encoding system including the code 0^{~} 127.

3. The keyboard according to claim 1 wherein said controller is an embedded controller.

4. The keyboard according to claim 1 wherein said middleware performs with steps of:
detecting an Input Method Editor (IME) for said operating system, thereby realizing the language using in said operating system; and
performing a matrix mapping procedure to convert said code signal into a new one conforming to an operation system of said data processing device if said code signal is not identical to that of said operation system.

5. The keyboard according to claim 1 wherein said special symbol or character is selected from a group consisting of ¥, £, €, E, α, β and γ.

6. The keyboard according to claim 1 wherein said special symbol key is located at an unoccupied portion of said keyboard.

7. The keyboard according to claim 1 wherein said data processing device comprises a notebook, a mobile phone, a personal digital assist (PDA), a panel PC or electronic equipment.

8. A code exchange method for use in a keyboard having at least one special symbol key, said method comprising steps of:
a) asserting a code signal when said special symbol key is depressed;
b) detecting an Input Method Editor (IME) for said operating system, thereby realizing the language using in said operating system; and
c) performing a matrix mapping procedure to convert said code signal into a new one conforming to an operation system of said data processing device if said code signal is not identical to that of said operation system.

9. The method according to claim 8 wherein the step (a) is performed in an embedded controller of said keyboard.

10. The method according to claim 8 wherein the steps (b) and (c) are performed by a middleware.
